# EUROPEAN PATENT APPLICATION

(11) **EP 2 706 681 A2**
(43) Date of publication of application: **12.03.2014**
(21) Application number: 13460061.8
(22) Date of filing: 05.09.2013
(51) Int. Cl.: H04B 10/079

(54) **Method and system for complex measurement of the output power of the optical signal, the optical signal-to-noise ratio and the level of the optical signal transfer between the optical chanels in the optical fiber communication system**

(30) Priority: 05.09.2012 PL 40065912
(71) Applicant: Telekomunikacja Polska S.A., 00-105 Warszawa (PL)
(72) Inventor: Perlicki Krzysztof, 05-820 Piastów (PL); Kowalski Andrzej, 02-795 Warszawa (PL)
(74) Representative: Piotrowicz, Alicja

(57) **Abstract**

Three controllers of linear polarisation state of optical signals (CLPSₖ₋₁, CLPSₖ, CLPSₖ₊₁) impart to three optical signals with consecutive wavelengths (λₖ₋₁, λₖ, λₖ₊₁) generated by three transmitters (Tₖ₋₁, Tₖ, Tₖ₊₁) a linear or orthogonal polarisation state. After the three optical signals with consecutive wavelengths (λₖ₋₁, λₖ, λₖ₊₁) emerge at the output interfaces of the tested system (TS), their polarisation states are corrected using optical signal polarisation correctors (PCₖ₋₁, PCₖ, PCₖ₊₁) and set in three polarised light analysers (PAₖ₋₁, PAₖ, PAₖ₊₁) in a way which ensures obtaining appropriate levels of the optical power for the individual optical signals. Then, the measurement results obtained by three optical power meters (OPMₖ₋₁, OPMₖ, OPMₖ₊₁) are automatically analysed and processed in a measurement result analyser (MRA), and the results of these processes are displayed on a monitor (M).

## Description

The invention relates to a method and a system for complex measurement of the output power of an optical signal, optical signal-to-noise ratio and level of penetration of an optical signal between optical channels in a fibre optic telecommunication system, particularly a fibre optic telecommunication system with wavelength multiplexing.

An optical signal with a specific wavelength is a channel for the transfer of information. Undesirable optical signals (noise), continuous or in the form of impulse packets, occurring in the internal structure of a fibre optic telecommunication system, cause disturbances in transmission of useful optical signals and cause distortions in the transmitted information. At their high level, and at data transmission rates from 40 Gbps to 100 Gbps (Gbps - gigabits per second), they can cause a blockade of transmission of useful optical signals in a fibre optic telecommunication system with wavelength multiplexing. Disturbances in the transmission of useful optical signals also result from the penetration of an optical signal between optical channels, the optical channels being optical signals with specific wavelengths.

A book by Krzysztof Perlicki entitled: "Pomiary w optycznych systemach telekomunikacyjnych" (Measurements in Optical Telecommunication Systems), published by Wydawnictwa Komunikacji i Laczności, describes methods for testing the transmission quality of optical signals in a fibre optic telecommunication system, taking under consideration suppression and disturbances of optical signals by noise and interchannel crosstalk.

From U.S. patent application No. US 2011/0293267 A1, a method and a system for the testing of transmission lines intended for proper propagation of optical signals are known. The tested optical signals, with strictly defined wavelengths, are introduced via an input device and an optical divider into a testing device consisting of: a coupler, a divider, a filter, an amplifier and a power detector connected serially. The results of measurements of the power of optical signals are developed in a processor and then displayed on the display of the power meter.

In U.S. patent application No. US 2012/0170929 A1, a device and a method for the monitoring of a compact optical system is described. The device comprises transmitters and receivers of optical signals with consecutive wavelengths, a multiplexer, a demultiplexer, optoelectronic converters, monitoring units for parameters of optical signals and a system for notification on exceeding of permissible numerical values of the measured parameters of optical signals.

According to the invention, the essence of the method for complex measurement of the output power of an optical signal, optical signal-to-noise ratio and level of penetration of an optical signal between optical channels in a fibre optic telecommunication system consists in the fact that an optical signal with a wavelength of λₖ₋₁ is generated in (k-1)^{th} transmitter of the optical signal, an optical signal with a wavelength of λₖ is generated in k^{th} transmitter of the optical signal, an optical signal with a wavelength of λₖ₊₁ is generated in (k+1)^{th} transmitter of the optical signal, where natural number k = 2, 3,... n, the consecutive wavelengths λₖ₋₁, λₖ and λₖ₊₁ being different from each other by a predefined numerical value.

In a measurement result analyser, three sets of electrical signals containing information on the measurement results for output optical power are determined. To determine a first set of electrical signals containing information on the measurement results for optical power, three optical signals with three consecutive wavelengths λₖ₋₁, λₖ and λₖ₊₁ have the same linear polarisation state imparted using three controllers of linear polarisation state of optical signals, while three optical signals with three consecutive wavelengths λₖ₋₁, λₖ and λₖ₊₁, occurring at three consecutive output interfaces of the tested system, have changes in linear polarisation states (imparted by the tested system) compensated for by using three polarisation correctors. After these operations, a retunement of k^{th} polarised light analyser is done in a way which ensures obtaining k^{th} optical signal with a wavelength of λₖ with the highest optical power possible at the analyser's output, then, the optical power of the three optical signals with three consecutive wavelengths λₖ₋₁, λₖ and λₖ₊₁ and the noise power of amplified spontaneous emission are measured using three optical power meters.

Three electrical signals containing information on the optical powers of the three optical signals with consecutive wavelengths λₖ₋₁, λₖ and λₖ₊₁ and an electrical signal containing information on the noise power of amplified spontaneous emission are stored in non-volatile memory. Then, these electrical signals are retrieved from the non-volatile memory, and a first set of electrical signals containing information on the measurement results for optical power is determined in the measurement result analyser, the set being formed of the three electrical signals containing information on the optical powers of (k-1)^{th}, k^{th} and (k+1)^{th} optical signals with wavelengths of λₖ₋₁, λₖ and λₖ₊₁, respectively, and the electrical signal containing information on the noise power of amplified spontaneous emission. The first set of electrical signals is a sum of the three electrical signals containing information on the optical powers of (k-1)^{th}, k^{th} and (k+1)^{th} optical signals with wavelengths of λₖ₋₁, λₖ and λₖ₊₁, respectively, and half of the electrical signal containing information on the noise power of amplified spontaneous emission.

To determine a second set of electrical signals containing information on the measurement results for optical power, three optical signals with three consecutive wavelengths λₖ₋₁, λₖ and λₖ₊₁ have the same linear polarisation state imparted using three controllers of linear polarisation state of optical signals, while three optical signals with three consecutive wavelengths λₖ₋₁, λₖ and λₖ₊₁, occurring at three consecutive output interfaces of the tested system, have changes in linear polarisation states (imparted by the tested system) compensated for by using three polarisation correctors, and next, a retunement of k^{th} polarised light analyser is done in a way which ensures obtaining k^{th} optical signal with a wavelength of λₖ with the lowest optical power possible at the analyser's output. Then, the optical powers of the three optical signals with three consecutive wavelengths λₖ₋₁, λₖ and λₖ₊₁ and the noise power of amplified spontaneous emission are measured using three optical power meters; and next, three electrical signals containing information on the optical powers of the three optical signals with consecutive wavelengths λₖ₋₁, λₖ and λₖ₊₁ and an electrical signal containing information on the noise power of amplified spontaneous emission are stored in non-volatile memory. Then, they are retrieved from the non-volatile memory, and a second set of electrical signals containing information on the measurement results for optical power is determined in the measurement result analyser, the set being formed only of the electrical signal containing information on the noise power of amplified spontaneous emission. The second set of electrical signals is a half of the electrical signal containing information on the noise power of amplified spontaneous emission.

To determine a third set of electrical signals containing information on the measurement results for optical power, three optical signals with three consecutive wavelengths λₖ₋₁, λₖ and λₖ₊₁ have the same linear polarisation state imparted using three controllers of linear polarisation state of optical signals, while three optical signals with three consecutive wavelengths λₖ₋₁, λₖ and λₖ₊₁, occurring at three consecutive output interfaces of the tested system, have changes in linear polarisation states (imparted by the tested system) compensated for by using three polarisation correctors, and next, a retunement of k^{th} polarised light analyser is done in a way which ensures obtaining k^{th} optical signal with a wavelength of λₖ with the highest optical power possible at the analyser's output, and by using k^{th} polarisation corrector the linear polarisation state of k^{th} optical signal with a wavelength of λₖ is changed to orthogonal in relation to the linear polarisation states of the optical signals with wavelengths of λₖ₋₁ and λₖ₊₁, and the optical powers of the three optical signals with three consecutive wavelengths λₖ₋₁, λₖ and λₖ₊₁ and the noise power of amplified spontaneous emission are measured using three optical power meters. Then, three electrical signals containing information on the optical powers of the three optical signals with wavelengths of λₖ₋₁, λₖ and λₖ₊₁ and an electrical signal containing information on the noise power of amplified spontaneous emission are stored in non-volatile memory. Then, they are retrieved from the non-volatile memory, and a third set of electrical signals containing information on the measurement results for optical power is determined in the measurement result analyser, the set being formed of the two electrical signals containing information on optical powers concerning (k-1)^{th} and (k+1)^{th} optical signals with wavelengths of λₖ₋₁ and λₖ₊₁, and the electrical signal containing information on the noise power of amplified spontaneous emission. The third set of electrical signals is expressed by the following formula P₃ = Pₖ₋₁+ Pₖ₊₁+0, 5P_{ASE}.

To determine the measurement result for the output optical power of k^{th} optical signal with a wavelength of λₖ, two electrical signals containing information on the first set of electrical signals and on the third set of electrical signals are retrieved from the non-volatile memory; then, a first difference of the sets of electrical signals is determined in the measurement result analyser, with the minuend being the first set of electrical signals containing information on the measurement results for optical power and the subtrahend being the third set of electrical signals containing information on the measurement results for optical power. The result of the first subtraction of the sets of electrical signals is the result of the measurement of the output optical power of k^{th} optical signal with a wavelength of λₖ, and the result of the operations performed on these electrical signals is displayed on the monitor.

To determine the measurement result for the optical signal-to-noise ratio, three electrical signals containing information on the first set, on the second set and on the third set of electrical signals containing information on the measurement results for optical power are retrieved from the non-volatile memory, and a first difference of the sets of electrical signals is determined in the measurement result analyser, with the minuend being the first set of electrical signals containing information on the measurement results for optical power and the subtrahend being the third set of electrical signals containing information on the measurement results for optical power; then, the first difference of electrical signals is divided by the doubled second set of electrical signals containing information on the measurement results for optical power. The result of the division of the difference of the sets of electrical signals containing information on the power measurement results by the doubled second set of electrical signals containing information on the measurement results for optical power constitutes the result of the measurement of the optical signal-to-noise ratio. The result of the operations performed on these electrical signals is displayed on the monitor.

To determine the measurement result for the level of penetration of an optical signal between optical channels, three electrical signals containing information on the first set, on the second set and on the third set of electrical signals containing information on the measurement results for optical power are retrieved from the non-volatile memory; then, a second difference of the sets of electrical signals is determined in the measurement result analyser, with the minuend being the third set of electrical signals containing information on the measurement results for optical power and the subtrahend being the second set of electrical signals containing information on the measurement results for optical power, and a first difference of the sets of electrical signals is determined, with the minuend being the first set of electrical signals containing information on the measurement results for optical power and the subtrahend being the third set of electrical signals containing information on the measurement results for optical power; next, the second difference of the sets of electrical signals is divided by the first difference of the sets of electrical signals. The result of the division of the two differences of the sets of electrical signals constitutes the level of penetration of an optical signal between optical channels, and the result of the operations performed on these electrical signals is displayed on the monitor.

According to the invention, the essence of the system for complex measurement of the output power of an optical signal, optical signal-to-noise ratio and level of penetration of an optical signal between optical channels in a fibre optic telecommunication system consists in the fact that (k-1)^{th} transmitter of an optical signal with a wavelength of λₖ₋₁ is connected to (k-1)^{th} input interface of the tested system via (k-1)^{th} controller of linear polarisation state of an optical signal, k^{th} transmitter of an optical signal with a wavelength of λₖ is connected to k^{th} input interface of the tested system via k^{th} controller of linear polarisation state of an optical signal, and (k+1)^{th} transmitter of an optical signal with a wavelength of λₖ₊₁ is connected to (k+1)^{th} input interface of the tested system via (k+1)^{th} controller of linear polarisation state of an optical signal, where natural number k = 2, 3,... n. Furthermore, (k-1)^{th} output interface of the tested system is connected to (k-1)^{th} input of the measurement result analyser via the serially connected (k-1)^{th} optical signal polarisation corrector, (k-1)^{th} optical signal polarisation analyser, (k-1)^{th} optical power meter of an optical signal with a wavelength of λₖ₋₁, while k^{th} output interface of the tested system is connected to k^{th} input of the measurement result analyser via the serially connected k^{th} optical signal polarisation corrector, k^{th} optical signal polarisation analyser, k^{th} optical power meter of an optical signal with a wavelength of λₖ, and (k+1)^{th} output interface of the tested system is connected to (k+1)^{th} input of the measurement result analyser via the serially connected (k+1)^{th} optical signal polarisation corrector, (k+1)^{th} optical signal polarisation analyser, (k+1)^{th} optical power meter of an optical signal with a wavelength of λₖ₊₁. The output of the measurement result analyser is connected to a monitor, and the non-volatile memory is connected to the measurement result analyser.

The basic advantageous consequences of application of the method and system for complex measurement of the output power of an optical signal, optical signal-to-noise ratio and level of penetration of an optical signal between optical channels in a fibre optic telecommunication system, according to the invention, in relation to state of art, consist in enabling one to carry out, in a short time period, a discerning evaluation of the transmission quality of optical signals in a fibre optic telecommunication system, particularly in a fibre optic telecommunication system with wavelength multiplexing. Moreover, the results of the measurement of the three parameters of an optical signal are developed automatically and displayed immediately on a monitor.

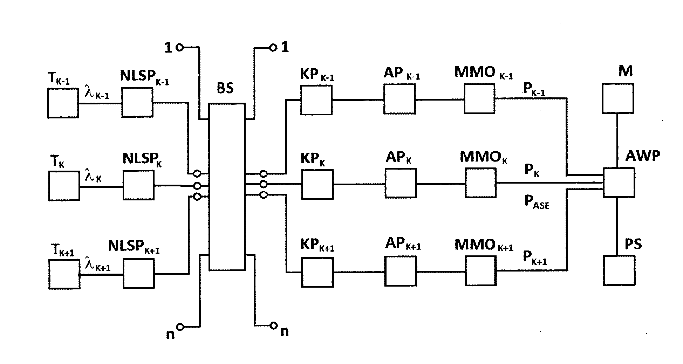

An embodiment of the system for complex measurement of the output power of an optical signal, optical signal-to-noise ratio and level of penetration of an optical signal between optical channels in a fibre optic telecommunication system, according to the invention, is shown in the Figure as a block diagram.

In an embodiment of the method of complex measurement of the output power of an optical signal, optical signal-to-noise ratio and level of penetration of an optical signal between optical channels in a fibre optic telecommunication system, according to the invention, an optical signal with a wavelength of λₖ₋₁ is generated in (k-1)^{th} transmitter of an optical signal Tₖ₋₁, an optical signal with a wavelength of λₖ is generated in k^{th} transmitter of an optical signal Tₖ, and an optical signal with a wavelength of λₖ₊₁ is generated in (k+1)^{th} transmitter of an optical signal Tₖ₊₁, where natural number k = 2, 3, ... , n, the consecutive wavelengths λₖ₋₁, λₖ and λₖ₊₁ being different from each other by a predefined numerical value.

In a measurement result analyser MRA, three sets of electrical signals containing information on the measurement results for output optical power are determined; then, to determine a first set of electrical signals containing information on the measurement results for optical power P₁, three optical signals with three consecutive wavelengths λₖ₋₁, λₖ and λₖ₊₁ have the same linear polarisation state imparted using three controllers of linear polarisation state of optical signals CLPSₖ₋₁, CLPSₖ and CLPSₓ₊₁.

Three optical signals with three consecutive wavelengths λₖ₋₁, λₖ and λₓ₊₁, occurring at three consecutive output interfaces of the tested system TS, have changes in linear polarisation states imparted by the tested system TS, compensated for by using three polarisation correctors PCₖ₋₁, PCₖ and PCₖ₊₁, then a retunement of k^{th} polarised light analyser PAₖ is done in a way which ensures obtaining k^{th} optical signal with a wavelength of λₖ with the highest optical power possible Pₖ at the analyser's output.

Then, the optical power of the three optical signals with three consecutive wavelengths λₖ₋₁, λₖ and λₖ₊₁ and the noise power of amplified spontaneous emission are measured using three optical power meters OPMₖ₋₁, OPMₖ and OPMₖ₊₁; and next, three electrical signals containing information on the optical powers Pₖ₋₁, Pₖ and Pₖ₊₁ of the three optical signals with consecutive wavelengths λₖ₋₁, λₖ and λₖ₊₁ and an electrical signal containing information on the noise power of amplified spontaneous emission P_{ASE} are stored in non-volatile memory NVM; afterwards, they are retrieved from the non-volatile memory NVM, and a first set of electrical signals containing information on the measurement results for optical power P₁ is determined in the measurement result analyser MRA, the set being formed of the three electrical signals containing information on the optical powers Pₖ₋₁, Pₖ and Pₖ₊₁ of (k-1)^{th}, k^{th} and (k+1)^{th} optical signals with wavelengths of λₖ₋₁, λₖ and λₖ₊₁, respectively, and the electrical signal containing information on the noise power of amplified spontaneous emission P_{ASE}. The first set of electrical signals is expressed by the following formula P₁ = Pₖ₋₁+Pₖ+Pₖ₊₁+0, 5P_{ASE}.

To determine a second set of electrical signals containing information on the measurement results for optical power P₂, three optical signals with three consecutive wavelengths λₖ₋₁, λₖ and λₖ₊₁ have the same linear polarisation state imparted using three controllers of linear polarisation state of optical signals CLPSₖ₋₁, CLPSₖ and CLPSₖ₊₁, and three optical signals with three consecutive wavelengths λₖ₋₁, λₖ and λₖ₊₁, occurring at three consecutive output interfaces of the tested system TS, have changes in linear polarisation states, imparted by the tested system TS, compensated for by using three polarisation correctors PCₖ₋₁, PCₖ and PCₖ₊₁; then a retunement of k^{th} polarised light analyser PAₖ is done in a way which ensures obtaining k^{th} optical signal with a wavelength of λₖ with the lowest optical power possible Pₖ at the analyser's output; next, the optical power of the three optical signals with three consecutive wavelengths λₖ₋₁, λₖ and λₖ₊₁ and the noise power of amplified spontaneous emission are measured using three optical power meters OPMₖ₋₁, OPMₖ and OPMₖ₊₁.

Three electrical signals containing information on the optical powers Pₖ₋₁, Pₖ and Pₖ₊₁ of the three optical signals with consecutive wavelengths λₖ₋₁, λₖ and λₖ₊₁, respectively, and an electrical signal containing information on the noise power of amplified spontaneous emission P_{ASE} are stored in non-volatile memory NVM. Then, they are retrieved from the non-volatile memory NVM and a second set of electrical signals containing information on the measurement results for optical power P₂ is determined in the measurement result analyser MRA, the set being formed of the electrical signal containing information on the noise power of amplified spontaneous emission (P_{ASE}). This second set of electrical signals is expressed by the following formula P₂ = 0, 5P_{ASE}.

To determine a third set of electrical signals containing information on the measurement results for optical power P₃, three optical signals with three consecutive wavelengths λₖ₋₁, λₖ and λₖ₊₁ have the same linear polarisation state imparted using three controllers of linear polarisation state of optical signals CLPSₖ₋₁, CLPSₖ and CLPSₖ₊₁, and three optical signals with three consecutive wavelengths λₖ₋₁, λₖ and λₖ₊₁, occurring at three consecutive output interfaces of the tested system TS have changes in linear polarisation states, imparted by the tested system TS, compensated for by using three polarisation correctors PCₖ₋₁, PCₖ and PCₖ₊₁, then a retunement of k^{th} polarised light analyser PAₖ is done in a way which ensures obtaining k^{th} optical signal with a wavelength of λₖ with the highest optical power possible Pₖ at the analyser's output, and the linear polarisation state of k^{th} optical signal with a wavelength of λₖ is changed to orthogonal in relation to the linear polarisation states of the optical signals with wavelengths of λₖ₋₁, λₖ₊₁ using k^{th} polarisation corrector PCₖ, and the optical powers of the three optical signals with three consecutive wavelengths λₖ₋₁, λₖ and λₖ₊₁ and the noise power of amplified spontaneous emission are measured using three optical power meters OPMₖ₋₁, OPMₖ and OPMₖ₊₁; and next, three electrical signals containing information on the optical powers Pₖ₋₁, Pₖ and Pₖ₊₁ of the three optical signals with wavelengths of λₖ₋₁, λₖ and λₖ₊₁, respectively, and an electrical signal containing information on the noise power of amplified spontaneous emission P_{ASE}, are stored in non-volatile memory NVM; then, they are retrieved from the non-volatile memory NVM, and a third set of electrical signals containing information on the measurement results for optical power P₃ is determined in the measurement result analyser MRA, the set being formed of the two electrical signals containing information on the optical powers Pₖ₋₁ and Pₖ₊₁ concerning (k-1)^{th} and (k+1)^{th} optical signals with wavelengths of λₖ₋₁ and λₓ₊₁, respectively, and the electrical signal containing information on the noise power of amplified spontaneous emission P_{ASE}. This third set of electrical signals is expressed by the following formula P₃ = Pₖ₋₁+Pₖ₊₁+0, 5P_{ASE}.

To determine the measurement result for the output optical power of k^{th} optical signal with a wavelength of λₖ, two electrical signals containing information on the first set of electrical signals P₁ and on the third set of electrical signals P₃ are retrieved from the non-volatile memory NVM; then, a first difference of the sets of electrical signals is determined in the measurement result analyser MRA, with the minuend being the first set of electrical signals containing information on the measurement results for optical power P₁ and the subtrahend being the third set of electrical signals containing information on the measurement results for optical power P₃, according to the formula P₁-P₃, and the result of the first subtraction of the sets of electrical signals is the result of the measurement of the output optical power of k^{th} optical signal with a wavelength of λₖ. The result of the operations performed on these electrical signals is displayed on the monitor M.

To determine the measurement result for the optical signal-to-noise ratio, three electrical signals containing information on the first set, on the second set and on the third set of electrical signals containing information on the measurement results for optical power are retrieved from the non-volatile memory NVM, and a first difference of the sets of electrical signals is determined in the measurement result analyser MRA, with the minuend being the first set of electrical signals containing information on the measurement results for optical power P₁ and the subtrahend being the third set of electrical signals containing information on the measurement results for optical power P₃; then, the first difference of electrical signals is divided by the doubled second set of electrical signals containing information on the measurement results for optical power P₂, according to the formula (P₁-P₃)/2P₂. The result of the division of the difference of the sets of electrical signals containing information on the power measurement results by the doubled second set of electrical signals containing information on the measurement results for optical power constitutes the result of the measurement of the optical signal-to-noise ratio. The result of the operations performed on these electrical signals is displayed on the monitor M.

To determine the measurement result for the level of penetration of an optical signal between optical channels, three electrical signals containing information on the first set, on the second set and on the third set of electrical signals containing information on the measurement results for optical power are retrieved from the non-volatile memory NVM; then, a second difference of the sets of electrical signals is determined in the measurement result analyser MRA, with the minuend being the third set of electrical signals containing information on the measurement results for optical power P₃ and the subtrahend being the second set of electrical signals containing information on the measurement results for optical power P₂; and a first difference of the sets of electrical signals is determined, with the minuend being the first set of electrical signals containing information on the measurement results for optical power P₁ and the subtrahend being the third set of electrical signals containing information on the measurement results for optical power P₃; then, the second difference of the sets of electrical signals is divided by the first difference of the sets of electrical signals, according to the formula (P₃-P₂)/(P₁-P₃), and the result of the division of the two differences of the sets of electrical signals constitutes the level of penetration of an optical signal between optical channels. The result of the operations performed on these electrical signals is displayed on the monitor M.

In an embodiment of the system for complex measurement of the output power of an optical signal, optical signal-to-noise ratio and level of penetration of an optical signal between optical channels in a fibre optic telecommunication system, according to the invention, (k-1)^{th} transmitter Tₖ₋₁ of an optical signal with a wavelength of λₖ₋₁ is connected to (k-1)^{th} input interface of the tested system TS via (k-1)^{th} controller of linear polarisation state of an optical signal CLPSₖ-₁, k^{th} transmitter Tₖ of an optical signal with a wavelength of λₖ is connected to k^{th} input interface of the tested system TS via k^{th} controller of linear polarisation state of an optical signal CLPSₖ, and (k+1)^{th} transmitter Tₖ₊₁ of an optical signal with a wavelength of λₖ₊₁ is connected to (k+1)^{th} input interface of the tested system TS via (k+1)^{th} controller of linear polarisation state of an optical signal CLPSₖ₊₁, where natural number k = 2, 3,... n.

At the same time, (k-1)^{th} output interface of the tested system TS is connected to (k-1)^{th} input of the measurement result analyser MRA via the serially connected (k-1)^{th} optical signal polarisation corrector PCₖ₋₁, (k-1)^{th} optical signal polarisation analyser PAₖ-₁, (k-1)^{th} optical power meter OPMₖ₋₁ of an optical signal with wavelength of λₖ₋1, and k^{th} output interface of the tested system TS is connected to k^{th} input of the measurement result analyser MRA via the serially connected k^{th} optical signal polarisation corrector PCₖ, k^{th} optical signal polarisation analyser PAₖ, k^{th} optical power meter OPMₖ of an optical signal with a wavelength of λₖ, and (k+1)^{th} output interface of the tested system TS is connected to (k+1)^{th} input of the measurement result analyser MRA via the serially connected (k+1)^{th} optical signal polarisation corrector PCₖ₊₁, (k+1)^{th} optical signal polarisation analyser PAₖ₊₁, (k+1)^{th} optical power meter OPMₖ₊₁ of an optical signal with a wavelength of λₖ₊₁. The output of the measurement result analyser MRA is connected to a monitor M, and the non-volatile memory NVM is connected to the measurement result analyser MRA.

The method and system for complex measurement of the output power of an optical signal, optical signal-to-noise ratio and level of penetration of an optical signal between optical channels in a fibre optic telecommunication system, according to the invention, is suitable to carry out, using a system with a simple functional structure, a complex measurement of three parameters of optical signals emerging at the output interfaces of a fibre optic telecommunication system, particularly of a fibre optic telecommunication system with wavelength multiplexing.

Though the method and system for complex measurement of the output power of an optical signal, optical signal-to-noise ratio and level of penetration of an optical signal between optical channels in a fibre optic telecommunication system, according to the invention, are defined by two independent claims, shown in the form of specific embodiments in the description of the invention and reproduced in the Figure, it is evident for a person skilled in the art of methods and systems for complex measurement of the output power of an optical signal, optical signal-to-noise ratio and level of penetration of an optical signal between optical channels in a fibre optic telecommunication system that the data on the method and system for complex measurement of the output power of an optical signal, optical signal-to-noise ratio and level of penetration of an optical signal between optical channels in a fibre optic telecommunication system contained in the claims cannot be interpreted as limiting the inventive idea only to these data.

## Claims

1. A method for complex measurement of the output power of an optical signal, optical signal-to-noise ratio and level of penetration of an optical signal between optical channels in a fibre optic telecommunication system consisting in measuring the optical power of optical signals and processing electrical signals, **characterised in that** an optical signal with a wavelength of (λₖ₋₁ is generated in (k-1)^{th} transmitter of an optical signal (Tₖ₋₁), an optical signal with a wavelength of (λₖ) is generated in k^{th} transmitter of an optical signal (Tₖ), an optical signal with a wavelength of (λₖ₊₁) is generated in (k+1)^{th} transmitter of an optical signal (Tₖ₊₁), where natural number k = 2, 3, ..., n; the consecutive wavelengths (λₖ₋₁, λₖ, λₖ₊₁) being different from each other by a predefined numerical value; and three sets of electrical signals containing information on the measurement results for output optical power are determined in a measurement result analyser (MRA), and when determining a first set of electrical signals containing information on the measurement results for optical power (P₁) three optical signals with three consecutive wavelengths (λₖ₋₁, λₖ, λₖ₊₁) have the same linear polarisation state imparted using three controllers of linear polarisation state of optical signals (CLPSₖ₋₁, CLPSₖ, CLPSₖ₊₁), and the three optical signals with three consecutive wavelengths (λₖ₋₁, λₖ, λₖ₊₁) occurring at three consecutive output interfaces of the tested system (TS), have changes in linear polarisation states, imparted by the tested system (TS), compensated for by using three polarisation correctors (PCₖ₋₁, PCₖ, PCₖ₊₁), then a retunement of k^{th} polarised light analyser (PAₖ) is done in a way which ensures obtaining k^{th} optical signal with a wavelength of (λₖ) with the highest optical power possible (Pₖ) at the analyser's output, then, the optical power of the three optical signals with three consecutive wavelengths (λₖ₋₁, λₖ, λₖ₊₁) and the noise power of amplified spontaneous emission are measured using three optical power meters (OPMk₋₁, OPMₖ, OPMₖ₊₁), and next, three electrical signals containing information on the optical powers (Pₖ₋₁, Pₖ, Pₖ₊₁) of the three optical signals with consecutive wavelengths (λₖ₋₁, λₖ, λₖ₊₁) and an electrical signal containing information on the noise power of amplified spontaneous emission (P_{ASE}) are stored in non-volatile memory (NVM), then they are retrieved from the non-volatile memory (NVM), and a first set of electrical signals containing information on the measurement results for optical power (P₁) is determined in the measurement result analyser (MRA), the set being formed of the three electrical signals containing information on the optical powers (Pₖ₋₁, Pₖ, Pₖ₊₁) of (k-1)^{th}, k^{th} and (k+1)^{th} optical signals with wavelengths of (λₖ₋₁, λₖ, λₖ₊₁) and the electrical signal containing information on the noise power of amplified spontaneous emission (P_{ASE}), the first set of electrical signals being expressed by the following formula (P₁ = Pₖ-₁+Pₖ+Pₖ₊₁+0, 5P_{ASE}) ; and when determining a second set of electrical signals containing information on the measurement results for optical power (P₂) three optical signals with three consecutive wavelengths (λₖ₋₁, λₖ, λₖ₊₁) have the same linear polarisation state imparted using three controllers of linear polarisation state of optical signals (CLPSₖ₋₁, CLPSₖ, CLPSₖ₊₁), and the three optical signals with three consecutive wavelengths (λₖ₋₁, λₖ, λₖ₊₁), occurring at three consecutive output interfaces of the tested system (TS), have changes in linear polarisation states, imparted by the tested system (TS), compensated for by using three polarisation correctors (PCₖ₋₁, PCₖ, PCₖ₊₁), then a retunement of k^{th} polarised light analyser (PAₖ) is done in a way which ensures obtaining k^{th} optical signal with a wavelength of (λₖ) with the lowest optical power possible (Pₖ) at the analyser's output, then the optical power of the three optical signals with three consecutive wavelengths (λₖ₋₁, λₖ, λₖ₊₁) and the noise power of amplified spontaneous emission are measured using three optical power meters (OPMₖ₋₁, OPMₖ, OPMₖ₊₁), and next, three electrical signals containing information on the optical powers (Pₖ₋₁, Pₖ, Pₖ₊₁) of the three optical signals with consecutive wavelengths (λₖ₋₁, λₖ, λₖ₊₁) and an electrical signal containing information on the noise power of amplified spontaneous emission (P_{ASE}) are stored in non-volatile memory (NVM), then they are retrieved from the non-volatile memory (NVM), and a second set of electrical signals containing information on the measurement results for optical power (P₂) is determined in the measurement result analyser (MRA), the set being formed of the electrical signal containing information on the noise power of amplified spontaneous emission (P_{ASE}), this second set of electrical signals being expressed by the following formula (P₂ = 0, 5P_{ASE}) ; and when determining a third set of electrical signals containing information on the measurement results for optical power (P₃) three optical signals with three consecutive wavelengths (λₖ-₁, λₖ, λₖ₊₁) have the same linear polarisation state imparted using three controllers of linear polarisation state of optical signals (CLPSₖ₋₁, CLPSₖ, CLPSₖ₊₁), and the three optical signals with three consecutive wavelengths (λₖ₋₁, λₖ, λₖ₊₁), occurring at three consecutive output interfaces of the tested system (TS), have changes in linear polarisation states, imparted by the tested system (TS), compensated for by using three polarisation correctors (PCₖ₋₁, PCₖ, PCₖ₊₁), then a retunement of k^{th} polarised light analyser (PAₖ) is done in a way which ensures obtaining k^{th} optical signal with a wavelength of (λₖ) with the highest optical power possible (Pₖ) at the analyser's output, while the linear polarisation state of k^{th} optical signal with a wavelength of (λₖ) is changed using k^{th} polarisation corrector (PCₖ) to orthogonal in relation to the linear polarisation states of the optical signals with wavelengths of (λₖ₋₁, λₖ₊₁), and the optical power of the three optical signals with three consecutive wavelengths (λₖ₋₁, λₖ, λₖ₊₁) and the noise power of amplified spontaneous emission are measured using three optical power meters (OPMₖ₋₁, OPMₖ, OPMₖ₊₁), next, three electrical signals containing information on the optical powers (Pₖ₋₁, Pₖ, Pₖ₊₁) of the three optical signals with wavelengths of (λₖ₋₁, λₖ, λₖ₊₁) and an electrical signal containing information on the noise power of amplified spontaneous emission (P_{ASE}) are stored in non-volatile memory (NVM), then they are retrieved from the non-volatile memory (NVM), and a third set of electrical signals containing information on the measurement results for optical power (P₃) is determined in the measurement result analyser (MRA), the set being formed of the two electrical signals containing information on optical powers (Pₖ₋₁, Pₖ₊₁) concerning (k-1)^{th} and (k+1)^{th} optical signals with wavelengths of (λₖ₋₁, λₖ₊₁) and the electrical signal containing information on the noise power of amplified spontaneous emission (P_{ASE}), the third set of electrical signals being expressed by the following formula (P₃ = Pₖ-₁+Pₖ₊₁+0, 5P_{ASE}); and when determining the measurement result for the output optical power of k^{th} optical signal with a wavelength of (λₖ), two electrical signals containing information on the first set of electrical signals (P₁) and on the third set of electrical signals (P₃) are retrieved from the non-volatile memory (NVM), then, a first difference of the sets of electrical signals is determined in the measurement result analyser (MRA), with the minuend being the first set of electrical signals containing information on the measurement results for optical power (P₁) and the subtrahend being the third set of electrical signals containing information on the measurement results for optical power (P₃), according to the formula (P₁-P₃), and the result of the first subtraction of the sets of electrical signals is the result of the measurement of the output optical power of k^{th} optical signal with a wavelength of (λₓ), and the result of the operations performed on these electrical signals is displayed on the monitor (M); and when determining the measurement result for the optical signal-to-noise ratio three electrical signals containing information on the first set, on the second set and on the third set of electrical signals containing information on the measurement results for optical power are retrieved from the non-volatile memory (NVM), and a first difference of the sets of electrical signals is determined in the measurement result analyser (MRA), with the minuend being the first set of electrical signals containing information on the measurement results for optical power (P₁) and the subtrahend being the third set of electrical signals containing information on the measurement results for optical power (P₃), then the first difference of electrical signals is divided by the doubled second set of electrical signals containing information on the measurement results for optical power (P₂), according to the formula (P₁-P₃)/2P₂, and the result of the division of the difference of the sets of electrical signals containing information on the power measurement results by the doubled second set of electrical signals containing information on the measurement results for optical power constitutes the result of the measurement of the optical signal-to-noise ratio, and the result of the operations performed on these electrical signals is displayed on the monitor (M); and when determining the measurement result for the level of penetration of an optical signal between optical channels, three electrical signals containing information on the first set, on the second set and on the third set of electrical signals containing information on the measurement results for optical power are retrieved from the non-volatile memory (NVM), then a second difference of the sets of electrical signals is determined in the measurement result analyser (MRA), with the minuend being the third set of electrical signals containing information on the measurement results for optical power (P₃) and the subtrahend being the second set of electrical signals containing information on the measurement results for optical power (P₂), and a first difference of the sets of electrical signals is determined, with the minuend being the first set of electrical signals containing information on the measurement results for optical power (P₁) and the subtrahend being the third set of electrical signals containing information on the measurement results for optical power (P₃), then the second difference of the sets of electrical signals is divided by the first difference of the sets of electrical signals, according to the formula (P₃-P₂)/(P₁-P₃), and the result of the division of these two differences of the sets of electrical signals constitutes the level of penetration of an optical signal between optical channels, and the result of the operations performed on these electrical signals is displayed on the monitor (M).

2. A system for complex measurement of the output power of an optical signal, optical signal-to-noise ratio and level of penetration of an optical signal between optical channels in a fibre optic telecommunication system, comprising transmitters of optical signals, optical signal power meters, a measurement result analyser, a non-volatile memory and a monitor, **characterised in that** (k-1)^{th} transmitter (Tₖ₋₁) of an optical signal with a wavelength of (λₖ₋₁) is connected to (k-1)^{th} input interface of the tested system (TS) via (k-1)^{th} controller of linear polarisation state of an optical signal (CLPSₖ₋₁), k^{th} transmitter (Tₖ) of an optical signal with a wavelength of (λₖ) is connected to k^{th} input interface of the tested system (TS) via k^{th} controller of linear polarisation state of an optical signal (CLPSₖ), and (k+1)^{th} transmitter (Tₖ₊₁) of an optical signal with a wavelength of (λₖ₊₁) is connected to (k+1)^{th} input interface of the tested system (TS) via (k+1)^{th} controller of linear polarisation state of an optical signal (CLPSₖ₊₁), where natural number k = 2, 3,... n; at the same time, (k-1)^{th} output interface of the tested system (TS) is connected to (k-1)^{th} input of the measurement result analyser (MRA) via the serially connected (k-1)^{th} optical signal polarisation corrector (PCₖ₋₁), (k-1)^{th} optical signal polarisation analyser (PAₖ₋₁), (k-1)^{th} optical power meter (OPMₖ₋₁) of an optical signal with a wavelength of (λₖ₋₁), and k^{th} output interface of the tested system (TS) is connected to k^{th} input of the measurement result analyser (MRA) via the serially connected k^{th} optical signal polarisation corrector (PCₖ), k^{th} optical signal polarisation analyser (PAₖ), k^{th} optical power meter (OPMₖ) of an optical signal with a wavelength of (λₓ), and (k+1)^{th} output interface of the tested system (TS) is connected to (k+1)^{th} input of the measurement result analyser (MRA) via the serially connected (k+1)^{th} optical signal polarisation corrector (PCₖ₊₁), (k+1)^{th} optical signal polarisation analyser (PAₖ₊₁), (k+1)^{th} optical power meter (OPMₖ₊₁) of an optical signal with a wavelength of (λₖ₊₁), the output of the measurement result analyser (MRA) being connected to the monitor (M), and the non-volatile memory (NVM) is connected to the measurement result analyser (MRA).
